# EUROPEAN PATENT APPLICATION

(11) **EP 2 731 344 A1**
(43) Date of publication of application: **14.05.2014**
(21) Application number: 13160367.2
(22) Date of filing: 21.03.2013
(51) Int. Cl.: H04N 21/4147, H04N 21/6543

(54) **Method and system for sending remote recording and/or remote broadcast tagging command by means of QR code to the set top box with personal video recorder feature**

(30) Priority: 08.11.2012 TR 201212919
(71) Applicant: KREA ICERIK HIZMETLERI VE PRODUKSIYON ANONIM SIRKETI, Istanbul (TR)
(72) Inventor: Alkanat, Erkan Kasif, 34353 Istanbul (TR)
(74) Representative: Iskender, Ibrahim

(57) **Abstract**

The present invention relates to sending remote recording and/or remote broadcast tagging command to the personal video recorder devices by the users through scanning, by means of a mobile terminal with a QR code reader, of the specially formed QR codes (Quick Response) of the TV programs that they want to watch by seeing said programs in a printed publication such as newspapers, magazines, brochures, banners, posters, etc. or that they want to record said programs to their set top boxes with PVR (Personal Video Recorder) feature.

## Description

### Technical Field

The present invention relates to sending remote recording and/or remote broadcast tagging command by means of QR (Quick Response) code to the set top box with PVR (Personal video recorder) feature.

### Prior Art

Set top box (STB) is a device converting digital signals to analog signals for enabling the digital television channel to be watched in the analog system. These devices range from the models having basic standard definition (SD) feature to the more advanced high definition (HD) capable models and to the personal video recording feature devices.

Today, with the rapid development of digital broadcasting, the use of set top boxes has become increasingly common. In this respect, the needs of users are met with devices having different characteristics and a variety of methods and technologies are developed in order to provide ease of use to the users.

Among said developed technologies, PVR devices are recording devices comprising a hard disk (hard memory). Thanks to these devices, the users, while watching a channel, are able to stop broadcast at any time, record the broadcast, rewind the broadcast to the starting point, continue watching the broadcast from the point being left or return to the normal broadcast. With the feature of broadcast recording, the programs are recorded in digital format and then, said programs can be viewed with the same digital quality of the live broadcasts.

Currently, 'remote broadcast tagging' is a reminder sent by the set top boxes to the users for not missing a program on TV that they want to watch even if they are far away from the PVR devices and 'remote recording' is the ability to give recording command for the program they want to watch.

In the prior art, various methods of sending broadcast tagging and remote recording commands to the set top boxes exist. Users can send remote broadcast tagging and remote recording procedures through the following: sending an SMS (short message service) by using their mobile phones; sending related commands to the call centers of broadcasting organizations; online procedures on the Internet; or installing a variety of applications on their mobile devices. Some difficulties are experienced in the implementation of these methods, wherein studies are carried out in order to improve them. Accordingly, following are of great importance: for users, perception of security and quick access; and for broadcasting organizations, meeting users expectations, adaptation of the technology to the sector, and prestige.

Developments in the area are needed for easy, secure and fast access to the devices in case the users are far away from the set top boxes with personal video recorder feature and utilization of barcode access technology is considered.

Today, barcodes can be efficiently used in many areas. As is known, barcodes are offered with various encoding methods for the optical machines to read specific information about the products such as production country, the product group, and the product type thereof. In general, they are 13-digit data groups. In case the specified 13-digit is not sufficient, barcode can be extended. However, as the image area per data of the barcode is large, when more specific information regarding the product such as serial number or manufacturing date thereof is desired to be stored, i.e. when the amount of information being stored by the barcodes are desired to be increased, generally, said barcode should have an image larger than the packaging size or larger than the reader's capacity, which creates a problem such as increased barcode area.

In the prior art, in case of a physical damage in excess of 20% that can occur on the barcodes of the products provided with said barcodes, some problems such as the unreadable barcodes are experienced. In addition, as the barcodes become increasingly popular and the benefits provided thereby are recognized, the market have begun to demand the barcode types containing more information, having different font characters and storage capacities as well as that can fit in a small area. Because of the listed disadvantages of the barcodes used in existing systems, data matrix application is preferred instead of the barcodes. Data matrices (two dimensional codes), different from the classical and one dimensional barcodes, can store data in both directions, therefore, they are new generation barcodes being capable of storing more data than the normal barcodes. In situations where one dimensional barcodes are not sufficient and storing more information is required, data matrices having higher readability in case the image is damaged and being able to store data of up to 2334 digits have been developed. For instance, image of a 13-digit barcode has a size of 35mm x 12mm, while the size of a 2300-digit data matrix is 14mm x 14mm. However, since the data matrix functions with a matrix system, it can store the data according to each of the points or spaces provided between the fixed and distinctive patterns thereof being full or empty.

In addition, the data matrix can transmit the data stored therein to the system even in the case of a 60% damage that can occur on the data matrix. In a data matrix, following data can be stored in addition to the barcode information: production date, expiry date, production notes, batch/serial number, some features of the product line in which the product is manufactured and simple use of the product.

QR (Quick Response) code, DataMatrix code and Aztec code are among the best known and most commonly used data matrices. Among these, QR code has many advantages over the conventional barcode types, wherein it is a new generation 2 dimensional barcode (or special matrix barcode) type being readable by the cameras of the mobile devices.

Nowadays, use of QR code has become widespread due to the smartphones with digital cameras. QR codes can be read by means of the following: as software, the applications in web sites and computer software; as devices, the smartphones and tablets, thus, with QR codes, the information desired to be shared can be quickly accessed and distributed. The preferred method to read the QR code is often to use a smartphone having a QR code reader mobile application installed therein.

QR code can contain various types of information that are much more comprehensive than a classical barcode. Barcode content can divert the user to the following by decrypting of the recorded visual: Internet addresses, e-mail addresses, advertisements, business contact information, phone numbers, contact information, related videos, services such as SMS (short message service), MMS (multimedia message service) or any geographic location information. Their size is 1/10 of the conventional barcodes, wherein they are capable of storing larger amounts of fonts and numbers in any language.

In the prior art document, the United States Patent numbered US20090031373, a system enabling to perform the required payment, when the pay television programs are purchased by the users through QR codes, by scanning the related code through mobile phones thereof without the need for the subscription agreements is disclosed.

In the Japanese Patent Document numbered JP2011078071, following is disclosed: diverting a certain person, through decrypting QR coded contact information by means of a mobile terminal (e.g. mobile phones, etc.), to the Internet site comprising the related video data and enabling to view said videos over said internet site.

### Brief Description of the Invention

The present invention is developed by being inspired from existing situations and seeks to solve the above mentioned drawbacks.

The object of the present invention is to confer speed and technology perception to the users by the following: scanning and transmittal to the PVR devices of the related QR code belonging to a program that they want to watch or record to their devices with PVR feature through seeing said program in a printed publication (such as newspapers, magazines, brochures, banners, posters, etc.) by means of a mobile terminal with a QR code reader.

Another object of the present invention is to provide the users with rapid access from any place, by means of the related QR code, to the detailed information about the programs of interest (trailers, subject information, cast information, etc.) when examining the program streams provided in the weekly or monthly program guides.

A further object of the present invention is to provide a reminder, in order not to miss programs, to the users and to enable automatic initiation of the program in the tagged time by tagging the programs being desired to watch and provided in the desired time interval through scanning the QR code thereof by means of a mobile terminal with a QR code reader.

A further object of the present invention is to enable the users watch the recorded broadcast whenever they want through recording the programs to the devices by means of scanning the QR code of said programs being desired to be recorded by a mobile terminal with a QR code reader even if they are far away from the devices with PVR feature.

Another object of the present invention is to provide realization of commands such as program tagging and recording command transmittal in a fast and convenient way by the user thanks to a simple interface to be provided to the user.

Another object of the present invention is to ensure connections of the users to be made in a secure way by means of the user name and password for the realization of the 'remote broadcast tagging' and/or 'remote recording' commands.

The structural and the characteristic features and all advantages of the present invention will be understood more clearly with the following figures and the detailed description written by referring to said figures and therefore, the evaluation needs to be done by taking said figures and detailed description into consideration.

### Figures for a Better Understanding of the Invention

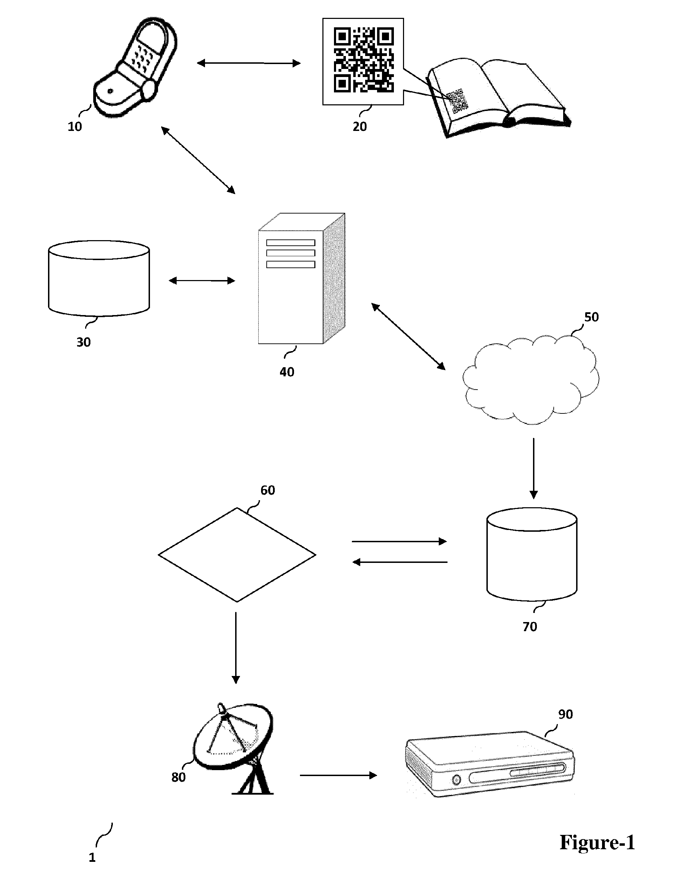

**Figure 1** - Schematic block diagram of the system enabling remote access with QR code to the set top boxes having personal video recorder (PVR) feature.

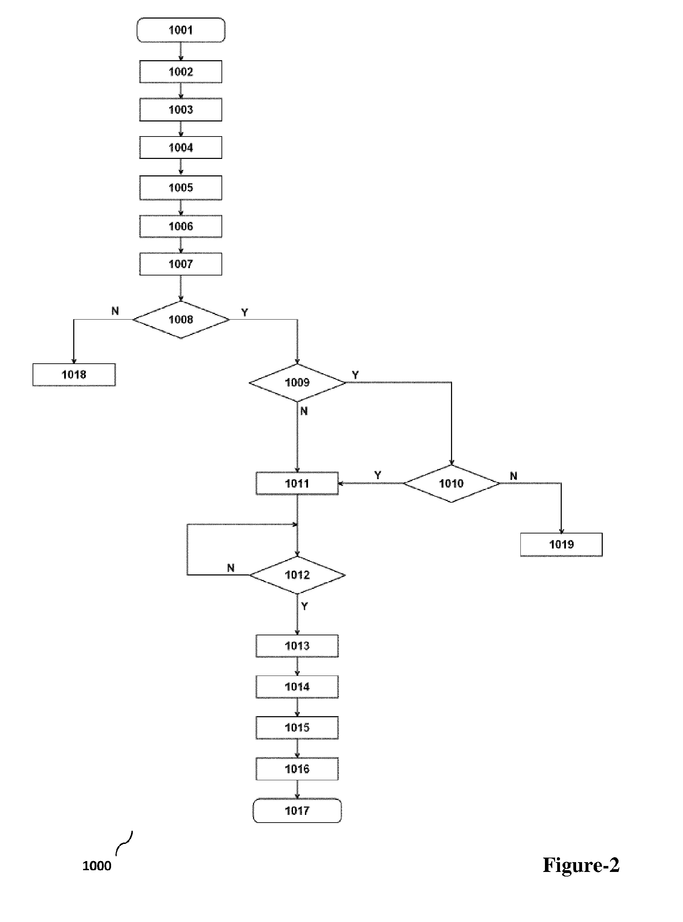

**Figure 2** - Flow diagram of the method providing remote broadcast tagging and/or remote recording to the set top boxes with PVR feature by reading the QR code for the related broadcast.

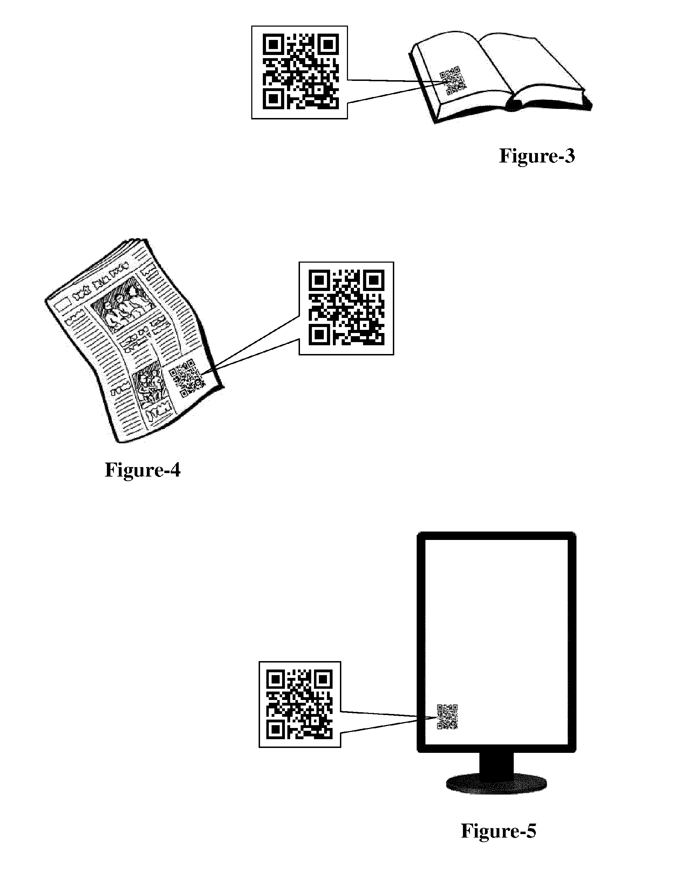

**Figure 3** - QR code printed magazine showing the use of the QR code.
**Figure 4** - QR code printed newspaper showing the use of the QR code.
**Figure 5** - QR code printed poster, banner, advertisement, etc. showing the use of the QR code.

The parts in the figures are numbered, wherein the following are the corresponding numbers thereof.

### Description of the References

1. Remote Access System
10. Mobile Terminal
20. QR Code
30. Database Content Management System (CMS Database)
40. Network Server
50. Broadcaster Information System (DBS)
60. Conditional Access System (CAS)
70. Conditional Access System Database (CAS Database)
80. Satellite
90. Personal Video Recorder (PVR)
1000. Remote Access Method
1001. Launching of the mobile application by the user via mobile terminal
1002. Running of the QR code reader within the application and scanning of the related QR code by means of the mobile terminal
1003. Sending of the related identification information contained in the scanned QR code to the mobile terminal
1004. Requesting of the related identification information of the broadcast detail by the mobile terminal from the network server
1005. Receiving of the related identification information of the broadcast detail from the CMS database by the network server
1006. Sending of the operation command for the broadcast of the related identification information according to the parameter defined in the QR code
1007. Sending of the operation command and information regarding the user to the DBS by the network server
1008. Making of the query about whether or not the user is a subscriber
1009. Making of the query about whether or not the PVR device is required for the operation command of the user
1010. Making of the query about whether or not the user has a PVR device
1011. Transfer of the operation command of the user and related information to the CAS database by the DBS
1012. Making of the task query to the CAS database by the CAS
1013. Notification of the tasks to the CAS from the CAS database
1014. Creation of the related EMMs by the CAS
1015. Sending of the related EMMs to the satellite
1016. Reaching of the related EMMs to the PVR devices via satellite
1017. Realization of the remote access to the PVR device by the user
1018. Notification of the error message to the user
1019. Notification of the error message to the user

PVR: (Personal Video Recorder)
CMS: (Content Management System)
CAS: (Conditional Access System)
STB: (Set Top Box)
DBS: (Broadcaster Information System)
EMM: (Entitlement Management Message)
PROGRAM ID: (Program Identification Information)
SCHEDULE ID: (Schedule Identification Information)

### Detailed Description of the Invention

Remote access system (1) enabling to send remote broadcast tagging and/or remote recording commands to set top boxes with personal video recorder feature by means of QR code, wherein it comprises the following:
- at least one mobile terminal (10) enabling the user (U) to decrypt the QR code (20);
- at least one QR code (20) comprising parameters therein and enabling said parameters to be decrypted by means of a special application;
- content management system database (30) comprising therein detailed information such as start, end times and duration of the programs;
- at least one network server (40) comprising therein the content that the users (U) want to access;
- at least one broadcaster information system (50) in which numerous information such as subscription package of the user (U), content of the package, subscription duration and characteristics of satellite receiver given to the user (U) is recorded and stored when the user (U) subscribes to any broadcast package;
- at least one conditional access system (60) encrypting the content and/or decrypting the encrypted content;
- at least one conditional access system database (70) in which the tasks coming to the conditional access system (60) are recorded;
- at least one satellite (80) sending the signals received from the earth back to the earth so as to cover a wider area; and
- at least one personal video recorder (90) comprising therein a hard disk for recording the audio and video broadcasts as well as enabling the content received from the satellite (80) to be converted to images.

In the system (1) according to the present invention the users (U) can send remote broadcast tagging and/or remote recording operation commands to their personal video recorder (90) devices by decrypting the QR codes (20) provided in any printed publication (newspapers, magazines, brochures, banners, posters, etc.) by means of a mobile terminal (10) with camera feature and a mobile application with a QR code (20) reading feature.

When the users (U) launch the mobile application with the mobile terminal (10), camera equipment of the mobile terminal (10) is automatically turned on. A sort of barcode reading is performed by the mobile application upon the user (U) focusing the camera lens on the related QR code (20) and the parameters hidden in the related QR code (20) are transferred to the mobile terminal (10) by being decrypted. Said parameters comprise information such as program identification information (Program ID), schedule identification information (Schedule ID) and operation command. In the program identification information, information regarding the broadcast (broadcast name, etc.) is defined, in the schedule identification information, information regarding the broadcast time (broadcast date, etc.) is defined, and in the operation command information, information (tag , record) regarding the type of operation that the user wants to perform is defined. Said identification information is comprised of alphabetic, numeric, or alphanumeric characters.

QR code (20) reader mobile applications do not know how to handle the data after the parameter contained in the QR code (20) is revealed. In this context, various application programming interfaces (API - Application Programming Interface) are needed in order to process the data. Application programming interface (API) is a method given for using a service offered by an operating system or a program. An application programming interface (API) is also used for the parameter that will enable transmitting an operation command contained in the QR code (20) to the personal video recorder (90) devices.

The broadcast of the identification information resulting from the decrypted parameter is taken from the network server (40) by the mobile terminal (10). Network server (40) gets the broadcast detail of the related identification information from the content management system database (30). Operation command is sent for the broadcast of the related identification information according to the parameters defined in the QR code (20).

Program identification information and schedule identification information are provided in the parameters defined in the QR code (20), wherein, in case the operation command information is not provided therein, selection of the operation command is left to the user (U).

Program identification information and operation command information are provided in the parameters defined in the QR code (20), wherein, in case the schedule identification information is not provided therein, different date alternatives for the related broadcast are offered to the user and the user is asked to make a selection among said dates.

In case program identification information, schedule identification information, and operation command information are provided in the parameters defined in the QR code (20), operation command is directly sent without making any selection for the related broadcast.

Network server (40) sends the operation command of the user (U) and information regarding the user (U) to the broadcaster information system (50). User (U) is required to perform membership login in order to be able to give the operation command. Thus, whether or not the user (U) is a subscriber is queried for checking if said user has authorization to give command for the broadcast of interest. If the user (U) is not a subscriber error message is reported. If the user (U) is a subscriber, as the next step, whether or not the personal video recorder (90) device is required for the operation command desired to be performed is queried. Broadcast tagging feature provided among the operation commands can be performed by all set top boxes, however, for the broadcast recording feature, the user (U) should have a personal video recorder (90) device. Thus, whether or not the user (U) has a personal video recorder (90) device is queried. After the approval of the membership information, in the case of a single membership, command of the user (U) is processed, in the case of user (U) having multiple memberships, the user is asked the membership for which the broadcast recording and/or tagging operation is to be performed and related command is processed after selection of the user. If the user (U) owns a personal video recorder (90) and wants to give a broadcast recording command, operation command of the user and related information is transferred to the conditional access system database (70) by the broadcaster information system (50). If the user (U) does not own a personal video recorder (90) device, error message is reported since recording command cannot be given.

Conditional access system (60), in order to determine whether or not a task is sent thereto, makes task query in the conditional access system database (70) during the variable period of time t. If a task is received in the conditional access system database (70), said task is reported to the conditional access system (60). Conditional access system (60) encrypts the information required to be encrypted as well as adds entitlement control message (ECM) and entitlement management message (EMM) data thereto. Said data is also called license control and audit information. These two messages together control the ability of the individual users or user groups to watch encrypted broadcasts.

Entitlement Control Message (ECM) is an encrypted message comprising, in general, the Control Word (CW) and access criteria. The received ECM is decrypted and the access criteria included therein are compared with the access criteria on the other side. In this context, if the receiving party is an authorized receiver, Control Word (CW) is released. Control Word (CW) is a key for the encryption algorithm used for decryption of the encrypted broadcast. Entitlement management messages (EMM) is the key used for the operations such as intervention to the membership information of the members, sending authorization to the cards provided in the set top boxes, bringing the set top boxes to standby mode or restarting said set top boxes.

After the conditional access system (60) creates the related entitlement management messages (EMM), it sends said messages to the satellite (80) as signals. Personal video recorder (90) devices receive in said signals sent to the satellite (80) and remote access of the user (U) is established.

A method (1000) used in the remote access system (1) according to the present invention for sending remote recording and/or remote broadcast tagging commands to the personal video recorder (90) device for the related broadcast upon scanning of the QR code (20), wherein it comprises the following steps:
- launching of the mobile application by the user (U) via mobile terminal (10) (1001);
- running of the QR code (20) reader within the application and scanning of the related QR code (20) by means of the mobile terminal (10) (1002);
- sending of the related identification information contained in the scanned QR code (20) to the mobile terminal (10) (1003);
- requesting of the related identification information of the broadcast detail by the mobile terminal (10) from the network server (40) (1004);
- receiving of the related identification information of the broadcast detail from the content management system database (30) by the network server (40) (1005);
- sending of the operation command for the broadcast of the related identification information according to the parameter defined in the QR code (20) (1006);
- sending of the operation command and information regarding the user to the broadcaster information system (50) by the network server (40) (1007);
- making of the query about whether or not the user (U) is a subscriber (1008);
- making of the query about whether or not the personal video recorder (90) device is required for the operation command of the user (U) (1009);
- making of the query about whether or not the user (U) has a personal video recorder (90) device (1010);
- transfer of the operation command of the user (U) and related information to the conditional access system database (70) by the broadcaster information system (50) (1011);
- making of the task query to the conditional access system database (70) by the conditional access system (60) (1012);
- notification of the tasks to the conditional access system (60) from the conditional access system database (70) (1013);
- creation of the related EMMs by the conditional access system (60) (1014);
- sending of the related EMMs to the satellite (80) (1015);
- reaching of the related EMMs to the personal video recorder (90) devices via satellite (80) (1016);
- realization of the remote access to the personal video recorder (90) device by the user (U) (1017);
- notification of the error message to the user (U) (1018); and
- notification of the error message to the user (U) (1019).

### (Figure 2)

On the basis of these basic concepts, it is possible to develop a wide range of applications for the system (1) according to the present invention and the method thereof, sending remote broadcast tagging and/or remote recording commands to the set top boxes with personal video recorder (PVR) feature by means of a QR (Quick Response) code, wherein the present invention cannot be limited to the examples described herein and fundamentally, it is as defined in the following claims.

## Claims

1. Method (1000) of the remote access system (1) according to the present invention for performing remote recording and/or remote broadcast tagging commands to the personal video recorder (90) device for the related broadcast upon scanning of the QR code (20), **characterized in that** it comprises the following steps:
- launching of the mobile application by the user (U) via mobile terminal (10) (1001);
- running of the QR code (20) reader within the application and scanning of the related QR code (20) by means of the mobile terminal (10) (1002);
- sending of the related identification information contained in the scanned QR code (20) to the mobile terminal (10) (1003);
- requesting of the related identification information of the broadcast detail by the mobile terminal (10) from the network server (40) (1004);
- receiving of the related identification information of the broadcast detail from the content management system database (30) by the network server (40) (1005);
- sending of the operation command for the broadcast of the related identification information according to the parameter defined in the QR code (20);
- sending of the operation command and information regarding the user (U) to the broadcaster information system (50) by the network server (40) (1007);
- making of the query about whether or not the user (U) is a subscriber (1008);
- making of the query about whether or not the personal video recorder (90) device is required for the operation command of the user (U) (1009);
- making of the query about whether or not the user (U) has a personal video recorder (90) device (1010);
- transfer of the operation command of the user (U) and related information to the conditional access system database (70) by the broadcaster information system (50) (1011);
- making of the task query to the conditional access system database (70) by the conditional access system (60) (1012);
- notification of the tasks to the conditional access system (60) from the conditional access system database (70) (1013);
- creation of the related EMMs by the conditional access system (60) (1014);
- sending of the related EMMs to the satellite (80) (1015);
- reaching of the related EMMs to the personal video recorder (90) devices via satellite (80) (1016); and
- realization of the remote access to the personal video recorder (90) device by the user (U) (1017).

2. Process step according to claim 1, **characterized in that** the operation command mentioned in the step of sending of the operation command for the broadcast of the related identification information according to the parameter defined in the QR code (20) (1006) is broadcast recording and/or broadcast tagging.

3. QR code (20) according to claim 1, enabling to send operation command for the broadcast of the related identification information according to the parameter contained therein, **characterized in that** it comprises therein a parameter comprising at least one program identification information, at least one schedule identification information, and at least one operation command.

4. QR code (20) according to claim 1, enabling to send operation command for the broadcast of the related identification information according to the parameter contained therein, **characterized in that** it comprises therein a parameter comprising at least one program identification information and at least one schedule identification information.

5. QR code (20) according to claim 1, enabling to send operation command for the broadcast of the related identification information according to the parameter contained therein, **characterized in that** it comprises therein a parameter comprising at least one program identification information and at least one operation command.

6. QR code (20) according to the preceding claims, enabling to send operation command for the broadcast of the related identification information according to the parameter contained therein, **characterized in that** the program identification information and/or schedule identification information parameters contained therein are comprised of alphabetic characters.

7. QR code (20) according to the preceding claims, enabling to send operation command for the broadcast of the related identification information according to the parameter contained therein, **characterized in that** the program identification information and/or schedule identification information parameters contained therein are comprised of numeric characters.

8. QR code (20) according to the preceding claims, enabling to send operation command for the broadcast of the related identification information according to the parameter contained therein, **characterized in that** the program identification information and/or schedule identification information parameters contained therein are comprised of alphanumeric characters.

9. Process step according to claim 1, **characterized in that** in the step of making of the query about whether or not the user (U) is a subscriber (1008), related error message is notified to the user (U) (1018) in case the user (U) is not a subscriber.

10. Process step according to claim 1, **characterized in that** in the step of making of the query about whether or not the user (U) has a personal video recorder (90) device (1010), related error message is notified to the user (U) (1019) in case the user (U) does not have a personal video recorder (90) device.

11. Process step according to claim 1, **characterized in that** in the step of making of the task query to the conditional access system database (70) by the conditional access system (60) (1012), task query is performed again after the variable period of time t in case a task is not reported in said step.

12. Process step according to claim 1, **characterized in that**, in case of user (U) having multiple subscriptions, the user (U) is offered to make a selection for determining the subscription that the operation command would be given for.

13. Process step according to claim 1, **characterized in that** a secure connection is provided for querying of the membership information of the user (U) by the broadcaster information system (50) and for giving operation command to the personal video recorder (90) device.

14. Remote access system (1) enabling to send remote broadcast tagging and/or remote recording commands to set top boxes with personal video recorder feature by means of QR code, **characterized in that** it comprises the following:
- at least one mobile terminal (10) enabling the user (U) to decrypt the QR code (20);
- at least one QR code (20) comprising parameters therein and enabling said parameters to be decrypted by means of a special application;
- content management system database (30) comprising therein detailed information such as start, end times and duration of the programs;
- at least one network server (40) comprising therein the content that the users (U) want to access;
- at least one broadcaster information system (50) in which numerous information such as subscription package of the user (U), content of the package, subscription duration and characteristics of satellite receiver given to the user (U) is recorded and stored when the user (U) subscribes to any broadcast package;
- at least one conditional access system (60) encrypting the content and/or decrypting the encrypted content;
- at least one conditional access system database (70) in which the tasks coming to the conditional access system (60) are recorded;
- at least one satellite (80) sending the signals received from the earth back to the earth so as to cover a wider area; and
- at least one personal video recorder (90) comprising therein a hard disk for recording the audio and video broadcasts as well as enabling the content received from the satellite (80) to be converted to images.
